(19) Europäisches Patentamt
European Patent Office
Office européen des brevets

(11) **EP 0 621 582 B1**

(12) **FASCICULE DE BREVET EUROPEEN**

(45) Date de publication et mention
de la délivrance du brevet:
**10.02.1999 Bulletin 1999/06**

(51) Int Cl.⁶: **G10L 3/00**, G10L 3/02

(21) Numéro de dépôt: **94400866.3**

(22) Date de dépôt: **21.04.1994**

(54) **Procédé de reconnaissance de parole à apprentissage**

Verfahren zur Spracherkennung mit Lernphase

Method of speech recognition with training phase

(84) Etats contractants désignés:
**BE DE ES GB IT NL SE**

(30) Priorité: **23.04.1993 FR 9304849**

(43) Date de publication de la demande:
**26.10.1994 Bulletin 1994/43**

(60) Demande divisionnaire: **97120086.0 / 0 840 290**

(73) Titulaire: **MATRA NORTEL COMMUNICATIONS
29000 Quimper (FR)**

(72) Inventeurs:
• **Lockwood, Philip
F-92160 Antony (FR)**
• **Alexandre, Patrice
F-78690 Les Essarts Le Roi (FR)**

(74) Mandataire: **Loisel, Bertrand et al
Cabinet Plasseraud,
84, rue d'Amsterdam
75440 Paris Cédex 09 (FR)**

(56) Documents cités:
**EP-A- 0 534 837**

• **INTERNATIONAL CONFERENCE ON
ACOUSTICS, SPEECH AND SIGNAL
PROCESSING 91, vol.2, 14 Mai 1991, TORONTO,
ONTARIO, CA pages 957 - 958 WU ET AL. 'Fast
self adapting broadband noise removal in the
cepstral domain'**
• **TREIZIEME COLLOQUE SUR LE TRAITEMENT
DU SIGNAL ET DES IMAGES (GRETSI), 16
Septembre 1991, JUAN LES PINS, FR pages 733
- 735 FAUCON ET AL. 'Débruitage da la parole
pour les radio-mobiles'**

**Description**

La présente invention concerne un procédé de traitement de la parole, comprenant une phase d'apprentissage pendant laquelle on traite un signal provenant d'un capteur pour obtenir des paramètres qui représentent des structures vocales prononcées par un utilisateur dans un environnement faiblement bruité et qu'on stocke dans un dictionnaire, et une phase de reconnaissance pendant laquelle le signal provenant du capteur est traité pour obtenir des paramètres qu'on compare à ceux stockés dans le dictionnaire pour reconnaître les structures vocales prononcées par l'utilisateur dans un environnement bruité.

Un tel procédé peut notamment s'appliquer dans le domaine de la commande vocale. Dans l'exemple typique du radio-téléphone de voiture, on souhaite permettre à l'utilisateur de commander la composition des numéros de téléphone en prononçant le nom de ses correspondants. Un répertoire de numéros préenregistrés est alors associé au dictionnaire dans lequel sont stockés les représentations des noms des correspondants qui ont été mémorisées lors de la phase d'apprentissage.

Les représentations cepstrales sont aujourd'hui à la base de la plupart des systèmes de reconnaissance de parole. L'idée première de cette représentation est qu'elle permet, par filtrage non-linéaire, d'isoler dans une certaine mesure l'information sémantique contenue dans la parole de l'information esthétique propre au locuteur (cf. "Homomorphic Analysis of Speech" par A.V. Oppenheim et R.W. Schafer, dans IEEE Trans.Audio Electroacoust., Vol. AU-16, juin 1968, pages 221 à 226). Cette approche utilise une technique déconvolutive basée sur la compression logarithmique de l'amplitude du module du spectre de parole. Les coefficients obtenus par transformée de Fourier inverse de ce spectre en logarithme sont appelés coefficients cepstraux (ce nom correspond à l'inversion de la première syllabe du mot spectre étant donné la transformation de Fourier inverse qui lie ces coefficients au spectre). Ce sont ces coefficients qui font en général l'objet de la reconnaissance qui, le plus souvent, fait appel aux modèles de Markov cachés et à l'algorithme de Viterbi.

La reconnaissance est souvent effectuée sur un signal préalablement traité pour supprimer une partie du bruit. Un tel traitement, utilisant une soustraction spectrale non linéaire, est décrit dans EP-A-0534837. L'article « Fast Self-Adapting Broadband Noise Removal in the Cepstral Domain » de C.S. Wu et al. décrit une autre méthode de suppression de bruit large bande, faisant appel à des représentations cepstrales avec une fonction racine pour effectuer la compression du spectre.

Une difficulté majeure rencontrée dans les systèmes de reconnaissance est que la phase d'apprentissage est en général effectuée en l'absence de bruit (voiture à l'arrêt), tandis que la reconnaissance peut avoir lieu en environnement bruyant (voiture roulante). Il en résulte une désadaptation qui affecte l'efficacité du système de reconnaissance.

Un but de l'invention est de réduire l'effet de cette désadaptation sur le taux de reconnaissance des mots prononcés en environnement bruyant.

Dans ce but, l'invention propose un procédé du type indiqué au début, dans lequel l'obtention desdits paramètres pendant les phases d'apprentissage et de reconnaissance comporte la formation de trames numériques de longueur prédéterminée à partir du signal provenant du capteur, la transformation de chaque trame du domaine temporel au domaine fréquentiel pour obtenir un spectre X(i), et l'application d'une transformation inverse, du domaine fréquentiel au domaine temporel, à la grandeur $|X(i)|^\gamma$, où $|X(i)|$ représente le module du spectre et $\gamma$ représente un exposant compris entre 1/2 et 3/4. En d'autres termes, la transformation homomorphique (transformée de Fourier $\rightarrow$ logarithme $\rightarrow$ transformée de Fourier inverse) classiquement utilisée pour obtenir les coefficients cepstraux est remplacée par une autre transformation homomorphique (transformée de Fourier $\rightarrow$ fonction racine $|\cdot|^\gamma \rightarrow$ transformée de Fourier inverse) permettant d'obtenir des coefficients dits « cepstraux en racine ». Les propriétés mathématiques de cette transformation cepstrale en racine ont été étudiées par J.S.Lim, « Spectral Root Homomorphic Deconvolution System" dans IEEE Transactions on Acoustics, Speech, and Signal Processing, Vol. ASSP27, N° 3, juin 1979, pages 223 à 233. L'invention propose de faire appel à cette transformation pour la reconnaissance de parole lorsqu'il y a désadaptation par rapport à la phase d'apprentissage en utilisant un exposant $\gamma$ compris entre 1/2 et 3/4, ce qui donne lieu à une amélioration de l'efficacité de la reconnaissance.

Un intérêt principal de l'utilisation des coefficients cepstraux en racine dans un système de reconnaissance de parole vient de leur robustesse aux variations des conditions de bruit rencontrées entre la phase d'apprentissage et la phase de reconnaissance. Cette robustesse se justifie en comparaison à l'approche cepstrale classique (compression logarithmique) dans la mesure où les zones les plus énergétiques du spectre (celles qui sont moins affectées par le bruit) sont accentuées dans l'analyse cepstrale en racine, particulièrement pour des valeurs de $\gamma$ proches de 2/3. Il est également possible de renforcer ce phénomène d'accentuation en adaptant de façon dynamique la valeur de $\gamma$ à chaque trame de signal.

Ainsi, dans un mode d'éxécution de l'invention, l'exposant $\gamma$, compris entre 1/2 et 3/4, est adapté de façon dynamique pour chaque trame pendant la phase de reconnaissance, par exemple par une formule du type

$$\gamma = K \sum_{i=0}^{N-1} \ln(|X(i)|)$$

où K désigne un facteur d'adaptation et N le nombre d'échantillons par trame.

Une autre possibilité consiste, dans la phase de reconnaissance, à sélectionner l'exposant $\gamma$ parmi plusieurs valeurs discrètes comprises entre 1/2 et 3/4 . On peut ainsi appliquer la transformation inverse, du domaine fréquentiel au domaine temporel, à chacune des grandeurs $|X(i)|^\gamma$ où l'exposant $\gamma$ correspond aux différentes valeurs discrètes, et sélectionner, pour chaque trame, l'exposant $\gamma$ en comparant les différents jeux de paramètres obtenus pour les différentes valeurs de l'exposant $\gamma$ à ceux stockés dans le dictionnaire et en retenant le jeu de paramètres procurant la correspondance la plus étroite avec une des structures vocales représentées dans le dictionnaire. Cette solution permet d'optimiser le taux de reconnaissance.

D'autres particularités et avantages de l'invention apparaîtront dans la description ci-après d'exemples de réalisation préférés et non limitatifs. Aux dessins annexés :

- la figure 1 représente sous forme synoptique un système de reconnaissance de parole mettant en oeuvre l'invention ;
- les figures 2 à 4 représentent sous forme synoptique des variantes de modules de calcul des coefficients cepstraux en racine utilisables dans le système de la figure 1 ; et
- les figures 5A et 5B sont des graphiques comparant les coefficients obtenus par une transformation logarithmique classique et par une transformation en racine selon l'invention.

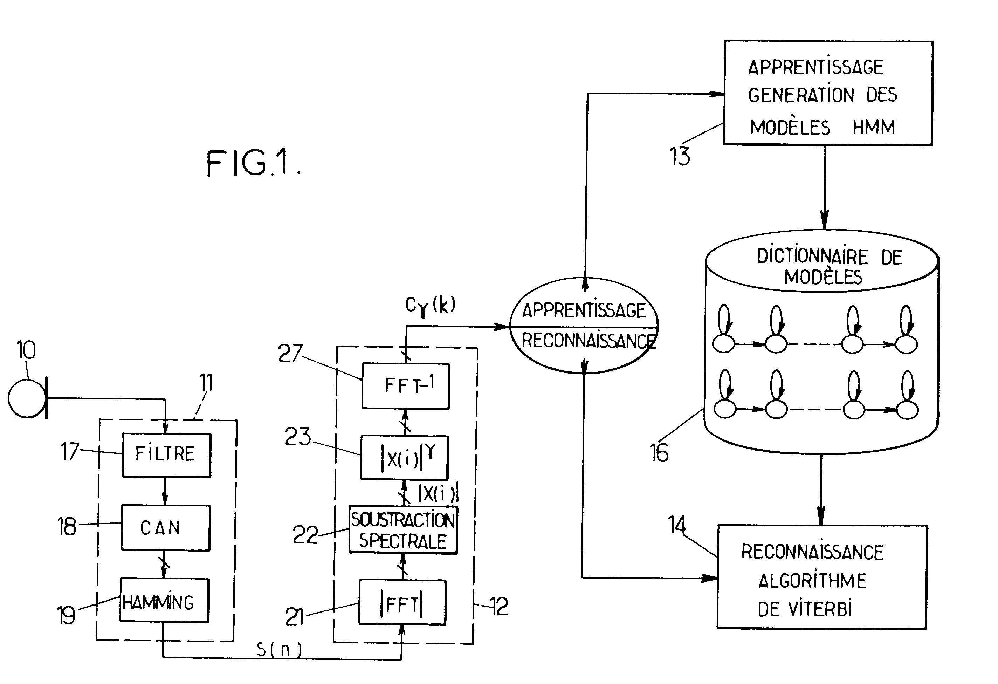

Un système de reconnaissance de parole comprend, de façon classique, un microphone 10, un module 11 de prétraitement du signal de sortie du microphone 10, un module 12 de calcul de coefficients représentatifs des structures vocales prononcées par l'utilisateur devant le microphone, un module d'apprentissage 13, et un module de reconnaissance 14. Sur la figure 1, on a représenté les modules 11 à 14 et le dictionnaire 16 sous forme synoptique. On comprendra que, dans la pratique, ces moyens peuvent être incorporés, en totalité ou en partie, dans un circuit spécialisé exécutant des programmes appropriés, ou encore comporter des processeurs de traitement de signal appropriés.

Le module de prétraitement 11 produit des trames numériques S(n) de longueur prédéterminée à partir du signal de sortie du microphone 10. Il comporte un filtre 17 dont le rôle est de préaccentuer le signal de sortie du microphone 10. Le filtre 17 a une fonction de transfert de la forme 1-a/z dans le domaine fréquentiel, a désignant un coefficient compris entre 0,7 et 1. La sortie du filtre 17 est adressée à un convertisseur analogique/numérique 18 qui échantillonne le signal à une cadence de 8 kHz. Les échantillons sont produits sous forme de trames de N = 256 échantillons, avec un recouvrement temporel entre trames successives (durée d'une trame = 32 ms). Les trames sont pondérées, en 19, en multipliant chaque échantillon n ($0 \leq n \leq N-1$) par une fonction de Hamming telle que H(n) = 0,54 - 0,46.cos ($2\pi n/(N-1)$).

Les trames S(n) ainsi obtenues sont adressées au module de calcul 12 qui, dans une première étape, leur applique une transformée de Fourier rapide (bloc 21) pour obtenir un spectre du signal pour chaque trame. Le spectre peut être obtenu pour N valeurs discrètes du domaine fréquentiel ou, de façon simplifiée, pour N/2 valeurs compte tenu de la symétrie du module du spectre. La sortie du bloc 21 est constituée par les modules des valeurs complexes du spectre. On peut opérer une soustraction spectrale sur le résultat de la transformée de Fourier afin de réduire la contribution du bruit. Une description d'un module 22 de soustraction spectrale non linéaire utilisable dans le cadre de l'invention est donnée dans la demande de brevet européen N° 0 534 837. Le module du spectre $|X(i)|$, corrigé par la soustraction spectrale, est ensuite soumis à une fonction de compression en racine $|X(i)|^\gamma$ pour chaque valeur discrète i du domaine fréquentiel (bloc 23), $\gamma$ désignant un exposant compris entre 1/2 et 3/4. Une transformée de Fourier inverse 27 est alors appliquée à la grandeur $|X(i)|^\gamma$ pour fournir les coefficients cepstraux en racine $C_\gamma(k)$. Comme la fonction $|X(i)|^\gamma$ est réelle et paire, la transformée de Fourier inverse opérée par le bloc 27 peut être une transformée en cosinus du type :

$$C_\gamma(k) = \sum_{i=0}^{N-1} |X(i)|^\gamma . \cos(2\pi k(i+0,5)/N)$$

k désignant l'indice des "quéfrences". Dans la pratique, on peut se contenter de calculer une vingtaine de coefficients $C_\gamma(k)$, par exemple pour $O \leq k \leq 20$.

En phase d'apprentissage, les coefficients $C_\gamma(k)$ sont fournis au module d'apprentissage 13 qui génère des modèles de type HMM (modèle de Markov caché à densités continues) à partir d'un certain nombre de répétitions de chaque mot par l'utilisateur en environnement non bruité ou faiblement bruité. Ces modèles HMM constituent les paramètres qui représentent les différents mots à reconnaître. Ils sont stockés dans la mémoire constituant le dictionnaire 16 à l'issue de l'apprentissage. Pour davantage d'explications sur les modèles de Markov cachés, on pourra par exemple se reporter aux articles "Continuous speech recognition using hidden Markov models" par J. Picone, IEEE ASSP Magazine, juillet 1990, pages 26-41, et "An introduction to hidden Markov models", par L.R. Rabiner et al, IEEE ASSP Magazine, janvier 1986, pages 4-16.

En phase de reconnaissance, les coefficients $C_\gamma(k)$ sont fournis au module de reconnaissance 14 qui les compare aux modèles stockés dans le dictionnaire 16 en appliquant par exemple des calculs de distances cepstrales euclidiennes pondérées (voir "Experiments with Nonlinear Spectral Subtractor (NSS), Hidden Markov Models and Projection, for robust speech recognition in cars", P. Lockwood, J. Boudy, Speech Communication Journal, N° 11, 1992, pages 215-228), et l'algorithme de Viterbi.

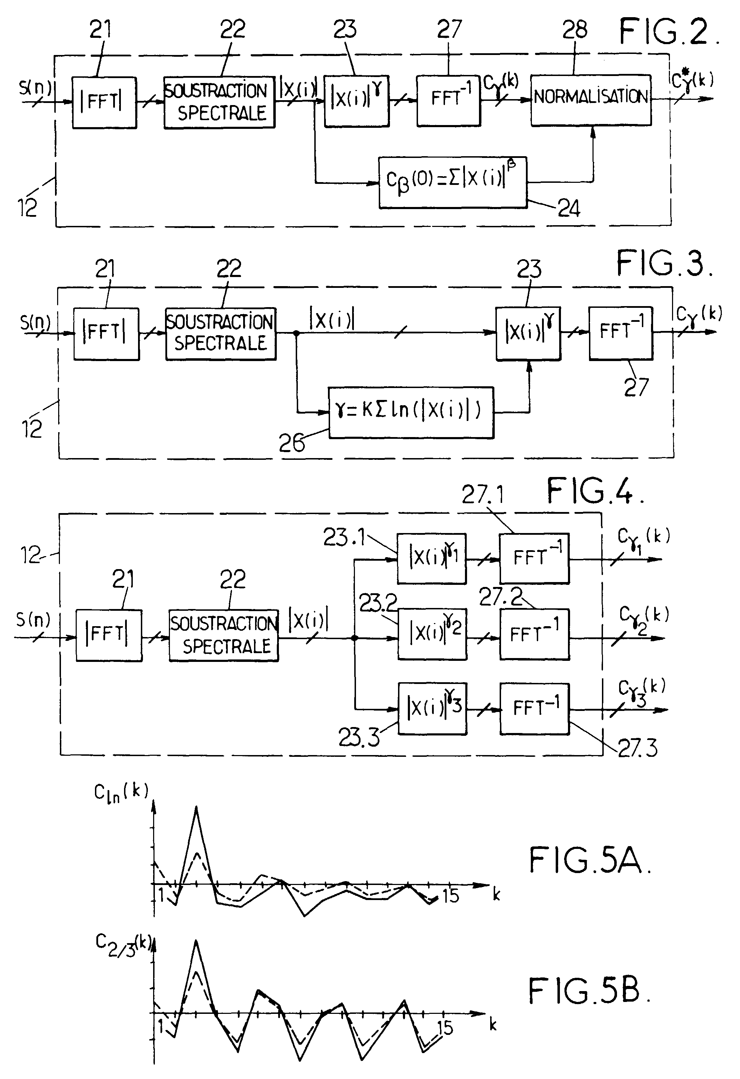

La figure 5B montre des coefficients cepstraux en racine obtenus pour une valeur constante optimale de l'exposant ($\gamma = 2/3$) dans le cas d'une femme française prononçant la voyelle [i] dans un environnement calme (trait plein) ou bruité (voiture roulant à 90 km/h, pointillés). La figure 5A montre les coefficients obtenus classiquement avec une fonction de compression logarithmique dans les mêmes conditions. On voit que le bruit affecte sensiblement moins les coefficients obtenus selon l'invention, particulièrement pour les indices k d'ordre élevé.

La soustraction spectrale 22 et la préaccentuation par le filtre 17, qui ne sont pas obligatoires, contribuent également à améliorer le taux de reconnaissance. Cette amélioration apparaît au tableau I, où on indique les taux de reconnaissance, en %, obtenus pour la valeur optimale $\gamma = 2/3$ en utilisant la base de données Matra qui comporte quarante-trois mots français prononcés par quatre locuteurs différents avec quatre prononciations pour l'apprentissage. L'effet favorable de la préaccentuation est surprenant car il n'est pratiquement pas observé lorsqu'on utilise la transformation homomorphique classique à fonction de compression logarithmique.

TABLEAU I

|  | sans soustraction spectrale | avec soustraction spectrale |
|---|---|---|
| sans préaccentuation | 64,9 | 92,7 |
| avec préaccentuation (a = 0,98) | 91,1 | 98,0 |

Les coefficients cepstraux en racine $C_\gamma(k)$ peuvent subir un certain. nombre d'autres transformations avant d'être adressés au module d'apprentissage 13 ou de reconnaissance 14. Par exemple, l'apprentissage et la reconnaissance peuvent porter sur la dérivée temporelle d'ordre 1 ou d'ordre 2 des coefficients cepstraux en racine, calculée sous forme discrète. La dérivée d'ordre 1 peut être calculée par la formule

$$\Delta C_\gamma(k, t) = \sum_{\tau = t-j}^{t+j} (\tau - t) \cdot C_\gamma(k, \tau)$$

où t représente l'indice temporel de la trame courante, $C_\gamma(k,t)$ représente le coefficient cepstral en racine d'indice k pour la trame d'indice t, et j représente un nombre entier inférieur à 4. De façon semblable, la dérivée d'ordre 2 s'exprime par

$$\Delta^2 C_\gamma(k, t) = \sum_{\tau = t-j}^{t+j} (\tau - t) \cdot \Delta C_\gamma(k, t)$$

Une autre transformation possible illustrée à la figure 2, consiste à normaliser les coefficients $C_\gamma(k)$ (bloc 28) en les divisant par la quantité

$$C_\beta(0) = \sum_{i=0}^{N-1} |X(i)|^\beta$$

dans laquelle $\beta$ désigne un nombre compris entre 0 et 2 qui n'est pas nécessairement égal à l'exposant $\gamma$ de la fonction en racine. La normalisation a pour effet de rendre les coefficients $C_\gamma^*(k)$ ainsi obtenus insensibles aux variations de gain du signal. Le paramètre $\beta$ peut être choisi de manière à optimiser la représentation du signal dans le bruit. Lorsque $\beta = \gamma$, le bloc de calcul 24 n'est pas nécessaire, la quantité $C_\beta(0) = C_\gamma(0)$ étant disponible comme résultat de la transformée de Fourier inverse pour k=0.

Les coefficients cepstraux en racine normalisés $C_\gamma^*(k)$ peuvent être adressés directement en entrée des modules d'apprentissage et de reconnaissance, ou ils peuvent d'abord être transformés par une méthode classique de prédiction linéaire (voir par exemple "Linear Prediction : A Tutorial", par J. Makhoul, Proc. IEEE, Vol. 63, N°4, avril 1975 ; et "Effectiveness of Linear Prediction Characteristics of the Speech Wave for Automatic Speaker Identification and Verification", par B.S. Atal, J. Acoust. Soc. Am., Vol. 55, N°6, juin 1974). La mise en oeuvre de la prédiction linéaire s'effectue alors de la façon suivante : les coefficients $A_i^\gamma$ de prédiction linéaire sont calculés par résolution des équations de Yule-Walker :

$$A_i^\gamma = -C_\gamma^*(i) - \sum_{k=1, k \neq i}^{p} A_k^\gamma \cdot C_\gamma^*(i-k)$$

où p est l'ordre de la prédiction (pouvant varier de 1 à 20), et $C_\gamma^*(k)$ est le k-ième coefficient cepstral en racine normalisé avec $\beta = \gamma$.

On calcule ensuite un autre jeu de coefficients cepstraux. Les nouveaux coefficients cepstraux $C_\gamma^{LP}(k)$ issus de l'analyse par prédiction linéaire sont calculés à partir de $A_i^\gamma$ par les formules récursives suivantes :

$$C_\gamma^{LP}(1) = -A_1^\gamma$$

$$C_\gamma^{LP}(k) = -A_k^\gamma - \sum_{i=1}^{k-1} A_i^\gamma \cdot C_\gamma^{LP}(k-i)$$

pour k variant de 2 à l'ordre p de la prédiction.

La comparaison avec les modèles stockés dans le dictionnaire 16 s'effectue alors sur la base des coefficients cepstraux transformés $C_\gamma^{LP}(k)$. En appliquant la transformation homomorphique en racine, on n'a pas observé de différences d'efficacité importantes entre l'utilisation directe des coefficients cepstraux en racine $C_\gamma(k)$ (LFCC) et leur utilisation avec prédiction linéaire $C_\gamma^{LP}(k)$ (LPCC), étant entendu que, dans ce dernier cas, les coefficients cepstraux en racine sont considérés comme fonction d'autocorrélation dans la résolution des équations de Yule-Walker.

La figure 3 montre une variante de réalisation du module de calcul 12 permettant une adaptation dynamique de l'exposant $\gamma$ pour chaque trame lors de la phase de reconnaissance. A chaque trame, l'exposant $\gamma$ est calculé par le bloc 26 selon la formule :

$$\gamma = K \cdot \sum_{i=0}^{N-1} \ln(|X(i)|)$$

où ln(.) désigne le logarithme népérien, et K désigne un facteur d'adaptation choisi de façon à contrôler la plage des valeurs prises par $\gamma$ ($\gamma_{min} < \gamma < \gamma_{max}$). Cette adaptation de l'exposant a lieu dans la phase de reconnaissance afin d'optimiser la robustesse du système en présence de bruit. En phase d'apprentissage, on utilise de préférence la même procédure d'adaptation de l'exposant. Bien entendu, des fonctions d'adaptation autres que celle explicitée ci-dessus sont envisageables.

La figure 4 montre une autre variante de réalisation du module de calcul 12, dans laquelle les coefficients cepstraux en racine sont calculés pour trois valeurs discrètes $\gamma_1$, $\gamma_2$ et $\gamma_3$ de l'exposant $\gamma$ comprises entre 0 et 2 lors de la phase de reconnaissance. Les blocs 23.1, 23.2 et 23.3 calculent les grandeurs $|X(i)|^{\gamma_1}$, $|X(i)|^{\gamma_2}$ et $|X(1)|^{\gamma_3}$ qui sont chacune soumises à la transformée de Fourier inverse en 27.1, 27.2 et 27.3. A chaque trame, les trois jeux de coefficents

$C_{\gamma_1}(k)$, $C_{\gamma_2}(k)$, $C_{\gamma_3}(k)$

sont adressés en parallèle au module de reconnaissance 14 qui retient alors le jeu de coefficients fournissant la correspondance la plus étroite avec l'un des modèles stockés dans le dictionnaire 16. Cette sélection de l'exposant $\gamma$ permet d'optimiser le taux de reconnaissance en augmentant seulement le volume de calcul en proportion du nombre de valeurs discrètes utilisées. Dans la phase d'apprentissage, les modèles HMM sont établis avec une valeur fixe de l'exposant égale à la plus petite valeur $\gamma_1$ parmi les valeurs discrètes utilisées en phase de reconnaissance.

## Revendications

1. Procédé de traitement de la parole, comprenant une phase d'apprentissage pendant laquelle on traite un signal provenant d'un capteur (10) pour obtenir des paramètres qui représentent des structures vocales prononcées par un utilisateur dans un environnement faiblement bruité et qu'on stocke dans un dictionnaire (16), et une phase de reconnaissance pendant laquelle le signal provenant du capteur (10) est traité pour obtenir des paramètres qu'on compare à ceux stockés dans le dictionnaire (16) pour reconnaître les structures vocales prononcées par l'utilisateur dans un environnement bruité, dans lequel l'obtention desdits paramètres pendant les phases d'apprentissage et de reconnaissance comporte la formation de trames numériques (S(n)) de longueur prédéterminée à partir du signal provenant du capteur, la transformation de chaque trame du domaine temporel au domaine fréquentiel pour obtenir un spectre X(i), et l'application d'une transformation inverse, du domaine fréquentiel au domaine temporel, à une grandeur calculée à partir du spectre X(i), caractérisé en ce que ladite grandeur est de la forme $|X(i)|^{\gamma}$, où $|X(i)|$ représente le module du spectre et $\gamma$ représente un exposant compris entre 1/2 et 3/4.

2. Procédé selon la revendication 1, caractérisé en ce que l'exposant $\gamma$ est constant et de l'ordre de 2/3.

3. Procédé selon la revendication 1, dans lequel l'exposant $\gamma$ est adapté de façon dynamique pour chaque trame dans la phase de reconnaissance.

4. Procédé selon la revendication 3, caractérisé en ce que, dans la phase de reconnaissance, l'exposant $\gamma$ est calculé pour chaque trame selon la formule

$$\gamma = K . \sum_{i=0}^{N-1} \ln(|X(i)|)$$

où K désigne un facteur d'adaptation positif, N désigne le nombre d'échantillons numériques dans la trame, et ln (.) désigne le logarithme népérien.

5. Procédé selon la revendication 1 dans lequel l'exposant $\gamma$ est sélectionné parmi plusieurs valeurs discrètes ($\gamma_1, \gamma_2, \gamma_3$) dans la phase de reconnaissance.

6. Procédé selon la revendication 5, caractérisé en ce que, dans la phase de reconnaissance, on applique la transformation inverse, du domaine fréquentiel au domaine temporel, à chacune des grandeurs $|X(i)|^{\gamma}$ où l'exposant $\gamma$ correspond aux différentes valeurs discrètes ($\gamma_1, \gamma_2, \gamma_3$), et en ce que, pour chaque trame, on sélectionne l'exposant en comparant les différents jeux de paramètres obtenus pour les différentes valeurs ($\gamma_1, \gamma_2, \gamma_3$), de l'exposant $\gamma$ à ceux stockés dans le dictionnaire (16) et en retenant le jeu de paramètres procurant la correspondance la plus étroite avec une des structures vocales représentées dans le dictionnaire.

7. Procédé selon la revendication 5 ou 6, caractérisé en ce que, dans la phase d'apprentissage, on applique la transformation inverse, du domaine fréquentiel au domaine temporel, à la grandeur IX(i)I$^{\gamma 1}$, où $\gamma 1$ désigne la plus petite des valeurs discrètes de l'exposant $\gamma$ utilisées en phase de reconnaissance.

8. Procédé selon l'une quelconque des revendications précédentes, caractérisé en ce qu'on applique au signal provenant du capteur une préaccentuation par un filtre (17) dont la fonction de transfert, dans le domaine fréquentiel, est de la forme 1 - a/z, où a désigne un coefficient compris entre 0,7 et 1.

9. Procédé selon l'une quelconque des revendications précédentes, caractérisé en ce que les coefficients ($C_\gamma$ (k)) obtenus par l'application de ladite transformation inverse sont normalisés en les divisant par un facteur

$$C_\beta(0) = \sum_{i=0}^{N-1} |X(i)|^\beta$$

où N désigne le nombre d'échantillons numériques par trame et $\beta$ désigne un nombre compris entre 0 et 2.

10. Procédé selon la revendication 9, caractérisé en ce que le nombre $\beta$ est égal à l'exposant $\gamma$, en ce qu'on applique aux coefficients normalisés ($C_\gamma$*(k)) une prédiction linéaire, en ce qu'on applique aux résultats ($A_i^\gamma$) de la prédiction linéaire un calcul récursif pour obtenir un autre jeu de coefficients ($C_\gamma^{LP}$(k)), et en ce que les paramètres faisant l'objet de la comparaison avec le dictionnaire (16) sont constitués par cet autre jeu de coefficients ($C_\gamma^{LP}$(k)).

**Patentansprüche**

1. Verfahren zur Sprachverarbeitung, mit einer Lernphase, während der ein von einem Sensor (10) stammendes Signal verarbeitet wird, um Parameter zu erstellen, welche von einem Anwender in einer schwach verlärmten Umgebung ausgesprochene Stimmstrukturen darstellen und welche in einem Vokabularverzeichnis (16) gespeichert werden, und einer Erkennungsphase, während der das von dem Sensor (10) stammende Signal verarbeitet wird, um Parameter zu erstellen, welche mit den im Vokabularverzeichnis (16) gespeicherten verglichen werden, um die vom Anwender in einer verlärmten Umgebung ausgesprochenen Stimmstrukturen wiederzuerkennen, bei dem das Erstellen der Parameter während der Lern- und Erkennungsphase die Bildung von digitalen Rastern (S (n)) mit vorgegebener Länge auf der Grundlage des vom Sensor stammenden Signals, die Transformation eines jeden Rasters vom Zeitbereich in den Frequenzbereich zum Erstellen eines Spektrums X(i), und die Anwendung einer inversen Transformation vom Frequenzbereich in den Zeitbereich auf eine auf der Grundlage des Spektrums X(i) berechnete Größe aufweist, dadurch gekennzeichnet, daß die Größe die Form IX(i)I$^\gamma$ hat, wobei IX(i)I den Spektralmodul und $\gamma$ einen zwischen 1/2 und 3/4 liegenden Exponenten darstellt.

2. Verfahren nach Anspruch 1, dadurch gekennzeichnet, daß der Exponent $\gamma$ konstant und von der Größenordnung 2/3 ist.

3. Verfahren nach Anspruch 1, bei dem der Exponent $\gamma$ in der Erkennungsphase für jedes Raster dynamisch angepaßt wird.

4. Verfahren nach Anspruch 3, dadurch gekennzeichnet, daß der Exponent $\gamma$ in der Erkennungsphase für jedes Raster gemäß der Formel

$$\gamma = K \cdot \sum_{i=0}^{N-1} \ln(|X(i)|)$$

berechnet wird,
wobei K einen positiven Anpassungsfaktor, N die Anzahl von digitalen Abtastwerten in dem Raster, und ln(.) den Neper-Logarithmus bezeichnet.

5. Verfahren nach Anspruch 1, bei dem der Exponent $\gamma$ in der Erkennungsphase unter einer Mehrzahl von diskreten Werten ($\gamma_1$, $\gamma_2$, $\gamma_3$) ausgewählt wird.

**6.** Verfahren nach Anspruch 5, dadurch gekennzeichnet, daß in der Erkennungsphase die inverse Transformation vom Frequenzbereich in den Zeitbereich auf jede der Größen $|X(i)|^\gamma$ angewandt wird, wobei der Exponent $\gamma$ den unterschiedlichen diskreten Werten ($\gamma_1$, $\gamma_2$, $\gamma_3$) entspricht, sowie dadurch, daß der Exponent für jedes Raster ausgewählt wird, indem die verschiedenen, für die unterschiedlichen Werte ($\gamma_1$, $\gamma_2$, $\gamma_3$) des Exponenten $\gamma$ erhaltenen Sätze von Parametern mit den im Vokabularverzeichnis (16) gespeicherten verglichen werden, und derjenige Satz von Parametern beibehalten wird, der die engste Entsprechung zu einer der in dem Vokabularverzeichnis dargestellten Stimmstrukturen liefert.

**7.** Verfahren nach Anspruch 5 oder 6, dadurch gekennzeichnet, daß in der Lernphase die inverse Transformation vom Frequenzbereich in den Zeitbereich auf die Größe $|X(i)|^{\gamma_1}$ angewandt wird, wobei $\gamma_1$ den kleinsten der in der Erkennungsphase verwendeten diskreten Werte des Exponenten $\gamma$ bezeichnet.

**8.** Verfahren nach einem der vorhergehenden Ansprüche, dadurch gekennzeichnet, daß auf das vom Sensor stammende Signal eine Preemphase durch ein Filter (17) angewandt wird, dessen Übertragungsfunktion in den Frequenzbereich die Form 1 - a/z hat, wobei a einen zwischen 0,7 und 1 liegenden Koeffizienten bezeichnet.

**9.** Verfahren nach einem der vorhergehenden Ansprüche, dadurch gekennzeichnet, daß die durch die Anwendung der inversen Transformation erhaltenen Koeffizienten ($C_\gamma(k)$) mittels Teilung durch einen Faktor

$$C_\beta(0) = \sum_{i=0}^{N-1} |X(i)|^\beta$$

normalisiert werden,
wobei N die Anzahl von digitalen Abtastwerten pro Raster und $\beta$ eine zwischen 0 und 2 liegende Zahl bezeichnet.

**10.** Verfahren nach Anspruch 9, dadurch gekennzeichnet, daß die Zahl gleich dem Exponenten $\gamma$ ist, daß auf die normalisierten Koeffizienten ($C_\gamma^*(k)$) eine lineare Prädiktion angewandt wird, daß auf die Ergebnisse ($A_i^\gamma$) der linearen Prädiktion eine rekursive Berechnung angewandt wird, um einen weiteren Satz von Koeffizienten ($C_\gamma^{LP}(k)$) zu erstellen, und daß die den Gegenstand des Vergleichs mit dem Vokabularverzeichnis (16) darstellenden Parameter durch diesen weiteren Satz von Koeffizienten ($C_\gamma^{LP}(k)$) gebildet sind.

**Claims**

**1.** A speech processing method comprising a learning phase during which a signal originating from a sensor (10) is processed to obtain parameters which represent voice structures uttered by a user in a mildly noisy environment and which are stored in a dictionary (16), and a recognition phase during which the signal originating from the sensor (10) is processed to obtain parameters which are compared with those stored in the dictionary (16) so as to recognize the voice structures uttered by the user in a noisy environment, wherein the obtaining of the said parameters during the learning and recognition phases includes the formation of digital frames (S(n)) of predetermined length from the signal originating from the sensor, the transformation of each frame from the time domain to the frequency domain to obtain a spectrum X(i), and the application of an inverse transformation, from the frequency domain to the time domain, to a magnitude calculated from the spectrum X(i), characterized in that said magnitude is of the form $|X(i)|^\gamma$, where $|X(i)|$ represents the modulus of the spectrum and $\gamma$ represents an exponent lying between 1/2 and 3/4.

**2.** The method as claimed in claim 1, characterized in that the exponent $\gamma$ is constant and of the order of 2/3.

**3.** The method as claimed in claim 1, wherein the exponent $\gamma$ is adapted dynamically for each frame in the recognition phase.

**4.** The method as claimed in claim 3, characterized in that, in the recognition phase, the exponent $\gamma$ is calculated for each frame via the formula

$$\gamma = K \quad . \quad \sum_{i=0}^{N-1} \ln\left(|X(i)|\right)$$

where K denotes a positive adaptation factor, N denotes the number of digital samples in the frame, and ln(.) denotes the natural logarithm.

5. The method as claimed in claim 1, wherein the exponent is selected from among several discrete values ($\gamma_1$, $\gamma_2$, $\gamma_3$) the recognition phase.

6. The method as claimed in claim 5, characterized in that, in the recognition phase, the inverse transformation, from the frequency domain to the time domain, is applied to each of the magnitudes $|X(i)|^\gamma$ where the exponent $\gamma$ corresponds to the various discrete values ($\gamma_1$, $\gamma_2$, $\gamma_3$), and in that for each frame, the exponent $\gamma$ is selected by comparing the various parameter sets obtained for the various values ($\gamma_1$, $\gamma_2$, $\gamma_3$) of the exponent $\gamma$ with those stored in the dictionary (16) and by retaining the parameter set affording the closest correspondence with one of the voice structures represented in the dictionary.

7. The method as claimed in claim 5 or 6, characterized in that, in the learning phase, the inverse transformation, from the frequency domain to the time domain, is applied to the magnitude $|X(i)|^{\gamma_1}$ where $\gamma_1$ denotes the smallest of the discrete values of the exponent $\gamma$ which are used in the recognition phase.

8. The method as claimed in any one of the preceding claims, characterized in that a pre-emphasis is applied to the signal originating from the sensor by a filter (17) whose transfer function, in the frequency domain, is of the form 1-a/z, where a denotes a coefficient lying between 0.7 and 1.

9. The method as claimed in any one of the preceding claims, characterized in that the coefficients $C_\gamma(k)$ obtained by applying the said inverse transformation are normalized by dividing them by a factor

$$C_\beta(0) \quad = \quad \sum_{i=0}^{N-1} |X(i)|^\beta$$

where N denotes the number of digital samples per frame and $\beta$ denotes a number lying between 0 and 2.

10. The method of claim 9, characterized in that the number $\beta$ is equal to the exponent $\gamma$, in that a linear prediction is applied to the normalized coefficients ($C_\gamma^*(k)$) in that a recursive calculation is applied to the results ($A_i^\gamma$) of the linear prediction to obtain another set of coefficients ($C_\gamma^{LP}(k)$), and in that the parameters forming the subject of the comparison with the dictionary (16) consist of said other set of coefficients ($C_\gamma^{LP}(k)$).

FIG.1.

APPRENTISSAGE
GENERATION DES
MODÈLES HMM

13

DICTIONNAIRE DE
MODÈLES

$c_\gamma(k)$

APPRENTISSAGE
RECONNAISSANCE

16

10

FILTRE

17

CAN

18

HAMMING

19

11

FFT$^{-1}$

27

$|X(i)|^\gamma$

23

$|X(i)|$

SOUSTRACTION
SPECTRALE

22

$|FFT|$

21

12

$S(n)$

14

RECONNAISSANCE
ALGORITHME
DE VITERBI

EP 0 621 582 B1

FIG.2.

S(n) → |FFT| (21) → SOUSTRACTION SPECTRALE (22) → |X(i)| → $|X(i)|^\gamma$ (23) → FFT$^{-1}$ (27) → $C_\gamma(k)$ → NORMALISATION (28) → $C_\gamma^*(k)$

$C_\beta(0) = \Sigma |X(i)|^\beta$ (24)

12

FIG.3.

S(n) → |FFT| (21) → SOUSTRACTION SPECTRALE (22) → |X(i)| → $|X(i)|^\gamma$ (23) → FFT$^{-1}$ (27) → $C_\gamma(k)$

$\gamma = K \Sigma \ln(|X(i)|)$ (26)

12

FIG.4.

S(n) → |FFT| (21) → SOUSTRACTION SPECTRALE (22) → |X(i)|

$|X(i)|^{\gamma_1}$ (23.1) → FFT$^{-1}$ (27.1) → $C_{\gamma_1}(k)$

$|X(i)|^{\gamma_2}$ (23.2) → FFT$^{-1}$ (27.2) → $C_{\gamma_2}(k)$

$|X(i)|^{\gamma_3}$ (23.3) → FFT$^{-1}$ (27.3) → $C_{\gamma_3}(k)$

12

$C_{ln}(k)$

1        15        k

FIG.5A.

$C_{2/3}(k)$

1        15        k

FIG.5B.